# EUROPEAN PATENT SPECIFICATION

(11) **EP 2 644 488 B1**
(45) Date of publication and mention of the grant of the patent: **14.05.2014**
(21) Application number: 12189856.3
(22) Date of filing: 25.10.2012
(51) Int. Cl.: B62J 17/00

(54) **Saddle-ride type vehicle**
Fahrzeug mit Sattel
Véhicule avec selle

(30) Priority: 27.03.2012 JP 2012070636
(43) Date of publication of application: 02.10.2013
(73) Proprietor: Yamaha Hatsudoki Kabushiki Kaisha, Iwata-shi, Shizuoka 438-8501 (JP)
(72) Inventor: Morishita, Kensuke, Iwata-shi, Shizuoka 438-8501 (JP)
(74) Representative: Grünecker, Kinkeldey, Stockmair & Schwanhäusser

(56) References cited:
- EP-A1- 2 090 503
- FR-A1- 2 575 990
- JP-A- S59 128 070

## Description

The present invention relates to a saddle-ride type vehicle according to the preamble of independent claim 1. Such a saddle-ride type vehicle can be taken from JP 59-167384 A.

Saddle-ride type vehicles such as motorcycles include a front cover disposed between a seat and a footboard in a vehicle up-and-down direction. Front covers with various shapes are used in consideration of design, assemblability or etc. For example, a scooter disclosed in Japan Laid-open Patent Application Publication No. JP-A-S59-167384 includes a front-side cover and a lateral-side cover. The front-side cover is formed by a middle portion and right and left lateral portions. The middle portion is extended in a vehicle transverse direction while passing through a vehicle center in the vehicle transverse direction. Simultaneously, the middle portion includes a curved shape backwardly extended. The right and left lateral portions are laterally extended from the middle portion, respectively. The lateral-side cover is disposed behind the front-side cover, while being connected to the right and left lateral portions.

Further, in the aforementioned scooter, an engine unit is disposed behind the front-side cover. An opening, communicated with an accommodation space of the engine unit, appears by the detachment of the front-side cover. In performing a maintenance work of the engine unit, the engine unit can be easily accessed through the opening.

Degradation in stiffness of the front cover is concerned with respect to the aforementioned shape of the front cover. Especially, the front cover is disposed between the seat and the footboard in the vehicle up-and-down direction. Therefore, a rider's foot may contact with the front cover in riding on and off the vehicle. Due to this, enhancement in stiffness of the front cover has been demanded.

To enhance the stiffness of the front cover, the front cover can be assumed to be reduced in its size by further forwardly extending the lateral-side cover. In this case, however, the aforementioned opening is reduced in its size. Therefore, degradation in accessibility to the engine unit is inevitable.

Further, in enhancing the stiffness of the front cover, the surrounding space of the front cover may be reduced depending on a shape of the front cover. In this case, a rider's foot easily makes contact with the front cover in riding on and off the vehicle. Further, the space for allowing a rider to put therein one's feet is reduced. These become factors of degrading rider's comfortableness.

It is an object of the present invention to provide a saddle-ride type vehicle whereby degradation in accessibility to an engine unit and degradation in rider's comfortableness can be inhibited, and simultaneously, a front cover can be enhanced in its stiffness. According to the present invention said object is solved by a saddle-ride type vehicle having the features of independent claim 1. Preferred embodiments are laid down in the dependent claims.

A saddle-ride type vehicle according to a first aspect includes a vehicle body frame, a seat, an engine unit, a footboard, a front cover and a side cover The seat is supported by the vehicle body frame. The engine unit is supported by the vehicle body frame, while being disposed under the seat. The footboard is disposed forwards of and lower than the seat. The footboard disposed in front of the engine unit. The front cover is disposed between the seat and the footboard in a vehicle up-and-down direction. The front cover is at least partially disposed in front of the engine unit. The side cover is disposed behind the front cover in a vehicle side view. The side cover is disposed laterally outwards of the engine unit. The side cover is formed separately from the front cover. The front cover includes a first front cover portion and a second front cover portion. The first front cover portion is disposed under the seat. The first front cover portion is shaped for extending in a vehicle transverse direction while passing through a vehicle center in the vehicle transverse direction and for extending rearwards. The second front cover is disposed rearwards of a front edge section of the first front cover portion in the vehicle side view. The second front cover portion is disposed outwardly lateral to the first front cover portion. A front edge section of the second front cover portion is overlapped with the first front cover portion in the vehicle side view. The front edge section of the second front cover portion includes a backwardly recessed shape.

A saddle-ride type vehicle according to a second aspect relates to the saddle-ride type vehicle according to the first aspect, and wherein the front edge section of the second front cover portion includes a shape recessed laterally outwards.

A saddle-ride type vehicle according to a third aspect relates to the saddle-ride type vehicle according to the first aspect, and wherein the seat includes a seat front edge section, a seat left-side edge section and a seat right-side edge section. The seat left-side edge section is extended obliquely rearwards and leftwards from the seat front edge section. The seat right-side edge section is extended obliquely rearwards and rightwards from the seat front edge section. **The second front cover portion includes a left front cover and a right front cover.** The **left** front cover is at least partially positioned laterally outwards of the seat left-side edge section while being at least partially positioned under the seat left-side edge section in a side view. The **right** front cover portion is at least partially positioned laterally outwards of the seat right-side edge section while being at least partially positioned under the seat right-side edge section in a side view.

A saddle-ride type vehicle according to a fourth aspect relates to the saddle-ride type vehicle according to the first aspect, and wherein the front edge section of the second front cover portion is overlapped with the first front cover portion in a front view.

A saddle-ride type vehicle according to a fifth aspect relates to the saddle-ride type vehicle according to the first aspect, and wherein the front cover includes a recessed portion. The recessed portion is disposed inwardly lateral to and extended along the front edge section of the second front cover portion.

A saddle-ride type vehicle according to a sixth aspect relates to the saddle-ride type vehicle according to the fifth aspect, and wherein the recessed portion includes an aperture formed for communicating with a space for disposing therein the engine unit.

A saddle-ride type vehicle according to a seventh aspect relates to the saddle-ride type vehicle according to the sixth aspect, and wherein the aperture is disposed for overlapping with the second front cover portion in a vehicle front view.

A saddle-ride type vehicle according to an eighth aspect relates to the saddle-ride type vehicle according to the sixth aspect, and wherein the engine unit includes a cylinder head disposed behind the front cover. The aperture is positioned higher than the cylinder head.

A saddle-ride type vehicle according to a ninth aspect relates to the saddle-ride type vehicle according to the fifth aspect, and wherein the front cover includes a plurality of fins. The fins are at least partially disposed in the recessed portion, respectively. The fins are extended in the vehicle transverse direction. The fins are disposed at intervals in the vehicle up-and-down direction and divide the recessed portion into a plurality of paths. At least one of the paths includes an aperture communicated with the space for disposing therein the engine unit.

A saddle-ride type vehicle according to a tenth aspect relates to the saddle-ride type vehicle according to the ninth aspect, and wherein the paths include a first path and a second path. The second path is positioned lower than the first path. The first path includes the aperture communicated with the space for disposing therein the engine unit. The second path includes no aperture formed therein.

A saddle-ride type vehicle according to an eleventh aspect relates to the saddle-ride type vehicle according to the first aspect, and wherein the second front cover portion is a member provided separately from the first front cover portion.

A saddle-ride type vehicle according to a twelfth aspect relates to the saddle-ride type vehicle according to the eleventh aspect, and wherein the second front cover portion is partially positioned rearwards of the first front cover portion. The second front cover portion is attached to the side cover.

A saddle-ride type vehicle according to a thirteenth aspect relates to the saddle-ride type vehicle according to the first aspect, and further includes a tandem footrest allowing a tandem rider to put thereon one's foot. The side cover includes a front portion positioned under and laterally outwards of the second front cover portion. The tandem footrest is disposed under the front portion of the side cover.

A saddle-ride type vehicle according to a fourteenth aspect relates to the saddle-ride type vehicle according to the first aspect, and wherein the seat, the side cover and the footboard form an opening enclosed thereby. The front cover covers the opening.

A saddle-ride type vehicle according to a fifteenth aspect relates to the saddle-ride type vehicle according to the fourteenth aspect, and wherein the engine unit is at least partially viewable through the opening in a front view while the front cover is detached.

### Advantageous Effects of Invention

According to the saddle-ride type vehicle of the first aspect, the front cover is a member provided separately from the side cover. It is thereby possible to reliably produce a large opening for a maintenance work of the engine unit that appears when the front cover is detached. Therefore, degradation in accessibility to the engine unit can be inhibited. Further, the front cover includes the first front cover portion and the second front cover portion. The first front cover portion can be thereby reduced in its size. Yet further, the front cover includes a shape that the first front cover portion and the second front cover portion are partially overlapped. Therefore, the front cover can be enhanced in its stiffness. Moreover, the front edge section of the second front cover portion includes a backwardly recessed shape. Therefore, such a situation can be inhibited that the space for allowing a rider to put therein one's feet is reduced by the second front cover portion. Accordingly, degradation in rider's comfortableness can be inhibited.

According to the saddle-ride type vehicle of the second aspect, the front edge section of the second front cover portion includes a shape recessed laterally outwards. Therefore, the space for allowing a rider to put therein one's feet can be reliably produced in a larger size.

According to the saddle-ride type vehicle of the third aspect, the second front cover portion is at least partially positioned laterally outwards of the seat left-side edge section, while being at least partially positioned under the seat left-side edge section in a side view. Further, the second front cover portion is at least partially positioned laterally outwards of the seat right-side edge section, while being at least partially positioned under the seat right-side edge section in a side view. The opening for a maintenance work can be thereby reliably produced with a large right-and-left width. Further, the space for allowing a rider to put therein one's feet can be reliably produced in a larger size.

According to the saddle-ride type vehicle of the fourth aspect, the first front cover, having chances of being hit by rider's feet, can be protected by the second front cover.

According to the saddle-ride type vehicle of the fifth aspect, the stiffness of the front cover can be further enhanced by the recessed portion.

According to the saddle-ride type vehicle of the sixth aspect, the cooling efficiency of the engine unit can be enhanced by the air stream flowing through the aperture of the front cover.

According to the saddle-ride type vehicle of the seventh aspect, the aperture is disposed for overlapping with the second front cover portion. It is thereby possible to inhibit foreign substance such as a trash and water from intruding through the aperture.

According to the saddle-ride type vehicle of the eighth aspect, the aperture is positioned higher than the cylinder head. The warm air in the surrounding of the engine is thereby easily discharged through the aperture. Accordingly, the engine unit can be further enhanced in its cooling efficiency.

According to the saddle-ride type vehicle of the ninth aspect, the stiffness of the front cover can be enhanced by the fins. Further, the air stream flowing through the aperture is guided by the fins, and therefore, the engine unit can be further enhanced in its cooling efficiency.

According to the saddle-ride type vehicle of the tenth aspect, the second path, positioned lower than the first path, includes no aperture formed therein. Therefore, water intrusion through the aperture can be inhibited.

According to the saddle-ride type vehicle of the eleventh aspect, the second front cover portion is a member provided separately from the first front cover portion. Therefore, the front cover can be easily formed.

According to the saddle-ride type vehicle of the twelfth aspect, the second front cover portion is partially positioned rearwards of the first front cover portion. Therefore, the first front cover portion can be attached to the side cover through the second front cover portion.

According to the saddle-ride type vehicle of the thirteenth aspect, the front portion of the side cover is positioned laterally outwards of the second front cover portion. Further, the tandem footrest is disposed under the front portion of the side cover. Therefore, tandem rider's feet can be inhibited from hitting the second front cover portion.

According to the saddle-ride type vehicle of the fourteenth aspect, the opening appears by detaching the front cover from the seat, the side cover and the footboard.

According to the saddle-ride type vehicle of the fifteenth aspect, the engine unit can be easily accessed through the opening.

### Brief Description of Drawings

FIG 1 is a side view of a saddle-ride type vehicle according to an exemplary embodiment.
FIG. 2 is a plan view of the saddle-ride type vehicle.
FIG. 3 is a perspective view of a portion of a rear portion cover.
FIG. 4 is a side view of a structure of the rear portion cover and the surrounding thereof.
FIG. 5 is a front view of a structure of the rear portion cover and the surrounding thereof.
FIG. 6 is an exploded perspective view of a front cover and a side cover.
FIG. 7 is an exploded front view of the front cover.
FIG. 8 is a side view of the front cover.
FIG. 9 is a diagram of the front cover seen from an obliquely rear side.
FIG 10 is a diagram of X-X cross-section in FIG 5.
FIG. 11 is a diagram of XI-XI cross-section in FIG 5.
FIG 12 is a diagram illustrating a state that the front cover is detached from the side cover.
FIG. 13 is a cross-sectional view of a front cover according to a first modification.
FIG. 14 is a cross-sectional view of a front cover according to a second modification.
FIG. 15 is a perspective view of a front cover according to a third modification.

### Description of Embodiments

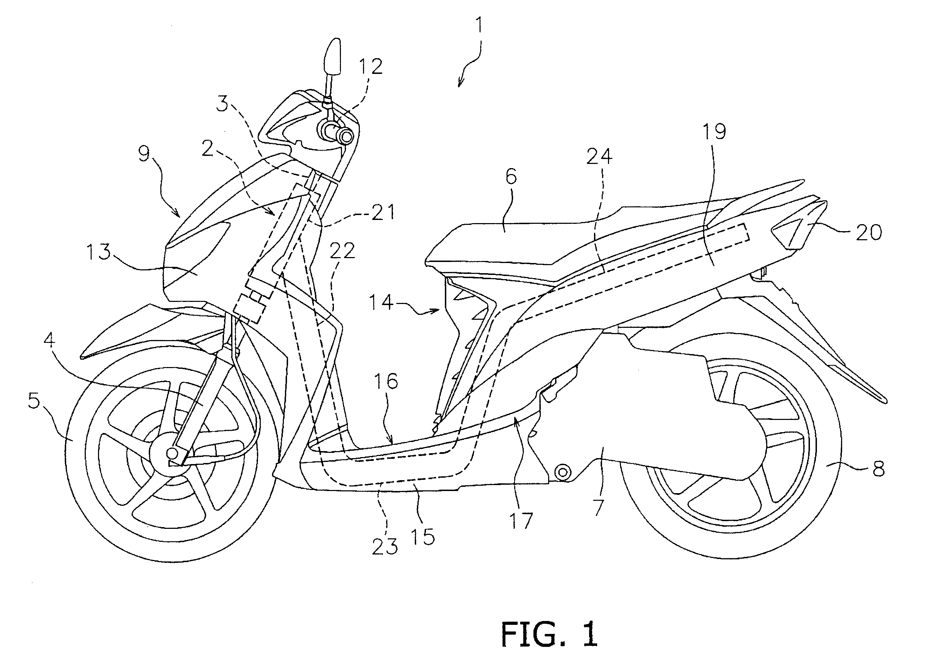

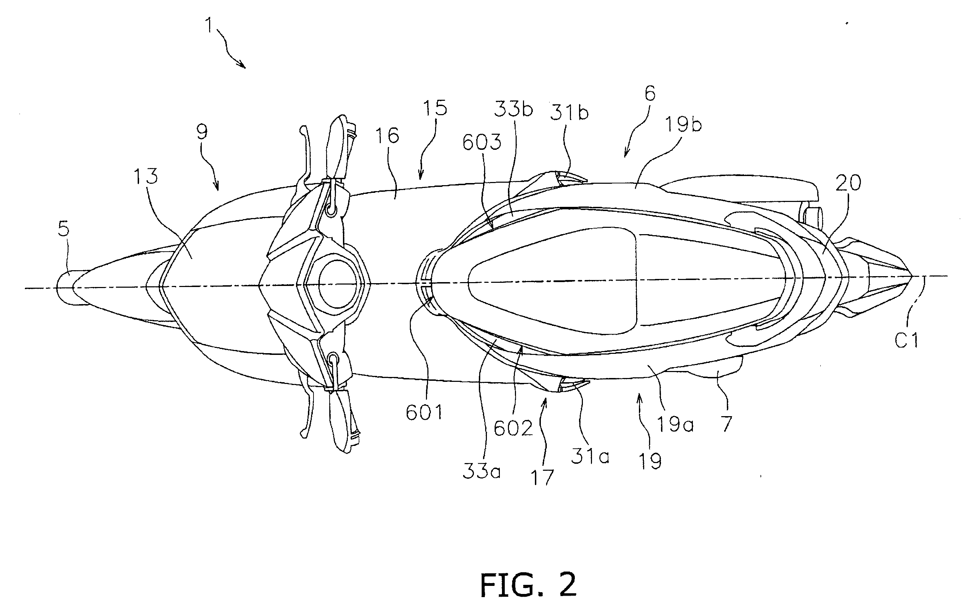

A saddle-ride type vehicle according to an exemplary embodiment will be hereinafter explained with reference to the figures. FIG. 1 is a left side view of the saddle-fide type vehicle 1 according to the present exemplary embodiment. FIG. 2 is a plan view of the saddle-ride type vehicle 1. The saddle-ride type vehicle 1 is a scooter-type motorcycle. The saddle-ride type vehicle 1 includes a vehicle body frame 2, a steering shaft 3, a front fork 4, a front wheel 5, a seat 6, an engine unit 7, a rear wheel 8 and a vehicle body cover 9. It should be noted in the present exemplary embodiment that a back-and-forth direction refers to a vehicle longitudinal direction seen from a rider seated on the seat 6. A right-and-left direction refers to a vehicle transverse direction seen from a rider seated on the seat 6. A front view and a side view respectively refer to a vehicle front view and a vehicle side view. Further, in the present exemplary embodiment, the term "laterally outward" means a direction away from a vehicle center line (see C1 in FIG. 2) that is extended in the back-and-forth direction while passing through the center in the vehicle transverse direction. The term "laterally inward" means a direction closer to the vehicle center line (see C1 in FIG. 2) that is extended in the back-and-forth direction while passing through the center in the vehicle transverse direction.

The vehicle body frame 2 is formed by, for example, pipes made of iron. The vehicle body frame 2 includes a head pipe portion 21, a down frame portion 22, an under frame portion 23 and a rear frame portion 24. It should be noted that the vehicle body frame 2 may be integrally formed by means of, for instance, bending, or alternatively, may be formed by integrating a plurality of components by means of, for instance, welding. The head pipe portion 21 is positioned in the vehicle center in the vehicle transverse direction. The steering shaft 3 is rotatably inserted into the head pipe portion 21. A handle portion 12 is coupled to the upper portion of the steering shaft 3. The front fork 4 is coupled to the lower portion of the steering shaft 3. The front fork 4 supports the front wheel 5 in a rotatable state.

The down frame portion 22 is connected to the head pipe portion 21. The down frame portion 22 is downwardly extended from the head pipe portion 21. The under frame portion 23 is connected to the bottom end of the down frame portion 22. The under frame portion 23 is backwardly extended from the down frame portion 22. The rear frame portion 24 is connected to the rear end of the under frame portion 23. The rear frame portion 24 is extended obliquely rearward and upward from the rear end of the under frame portion 23.

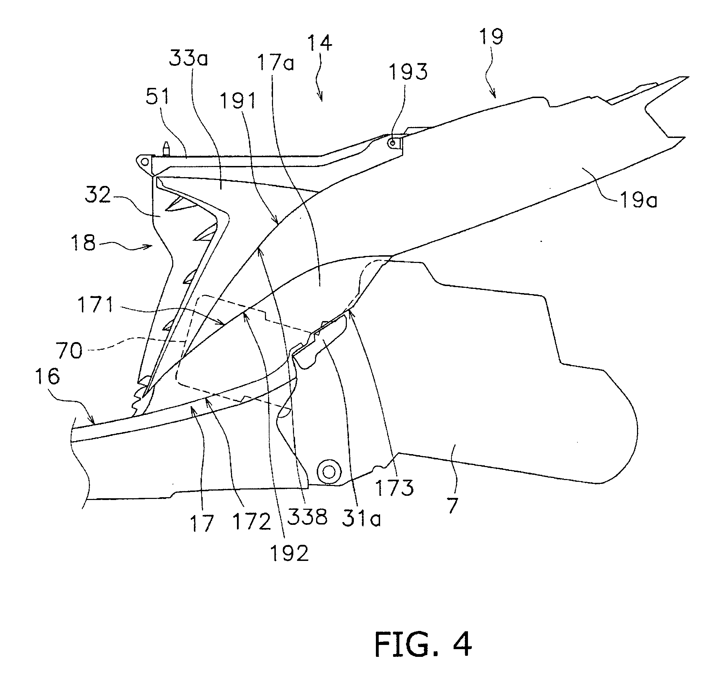

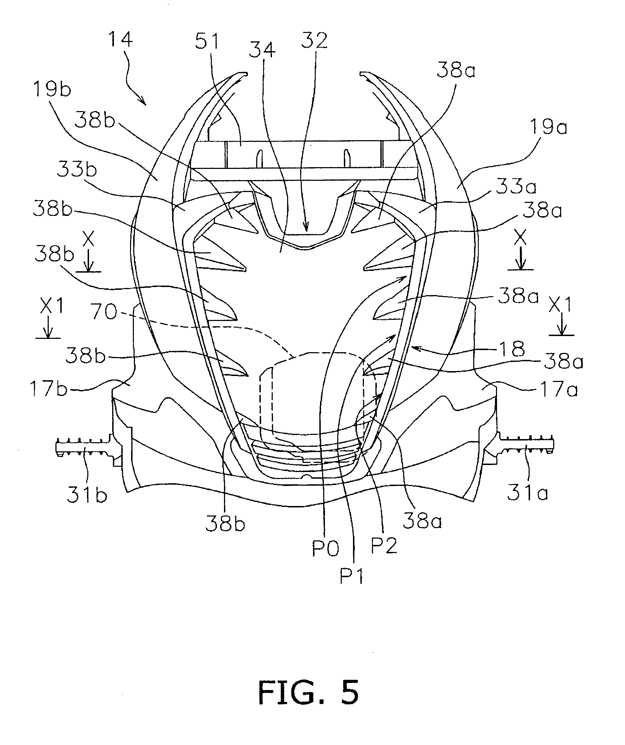

The seat 6 is disposed over the rear frame portion 24. The seat 6 is positioned rearward of the head pipe portion 21. The seat 6 is supported by the vehicle body frame 2. It should be noted that the seat 6 may be supported by the vehicle body frame 2 through another member without being directly attached to the vehicle body frame 2. Specifically, the seat 6 is supported by the rear frame portion 24 through an accommodation portion 51 (see FIGS. 4 and 5) to be described. As illustrated in FIG 2, the seat 6 includes a seat front edge section 601, a seat left-side edge section 602 and a seat right-side edge section 603. The seat front edge section 601 is positioned forwards of the seat left-side edge section 602 and the seat right-side edge section 603. The seat left-side edge section 602 is extended obliquely rearwards and leftwards from the seat front edge section 601. The seat right-side edge section 603 is extended obliquely rearwards and rightwards from the seat front edge section 601.

The engine unit 7 is disposed under the seat 6. The engine unit 7 is supported by the vehicle body frame 2. The engine unit 7 is pivotably attached to the vehicle body frame 2 through a bracket (not illustrated in the figures). The engine unit 7 includes an output shaft (not illustrated in the figures). The rear wheel 8 is rotatably supported by the output shaft. The engine unit 7 and the rear wheel 8 form a unit swing that is pivotable with respect to the vehicle body frame 2.

As illustrated in FIG 1, the vehicle body cover 9 includes a front portion cover 13, a rear portion cover 14 and an under cover 15. The front portion cover 13 mainly covers the surrounding of the head pipe portion 21 and the down frame portion 22. The rear portion cover 14 is positioned under the seat 6. The rear portion cover 14 covers the front side and the both lateral sides of the rear frame portion 24. The rear portion cover 14 will be explained below in detail. The under cover 15 is positioned between the front portion cover 13 and the rear portion cover 14 in the back-and-forth direction. The under cover 15 couples the front portion cover 13 and the rear portion cover 14. The under cover 15 includes a footboard 16.

The footboard 16 is positioned between the front wheel 5 and the seat 6 in the back-and-forth direction. The footboard 16 is positioned forwards of and lower than the seat 6. The footboard 16 is disposed in front of the engine unit 7. The footboard 16 is a surface on which a rider seated on the seat 6 puts one's feet during travelling. The footboard 16 is positioned over the under frame portion 23. The footboard 16 is positioned between the down frame portion 22 and the rear frame portion 24 in the back-and-forth direction. The footboard 16 includes an entirely flat shape in the vehicle transverse direction. The expression "the footboard 16 is flat" herein means that the footboard 16 is flat to the extent of allowing a rider to put one's feet on any portion of the footrest portion. In other words, a convexo-concave may be formed on the footboard 16 for an antiskid purpose or etc.

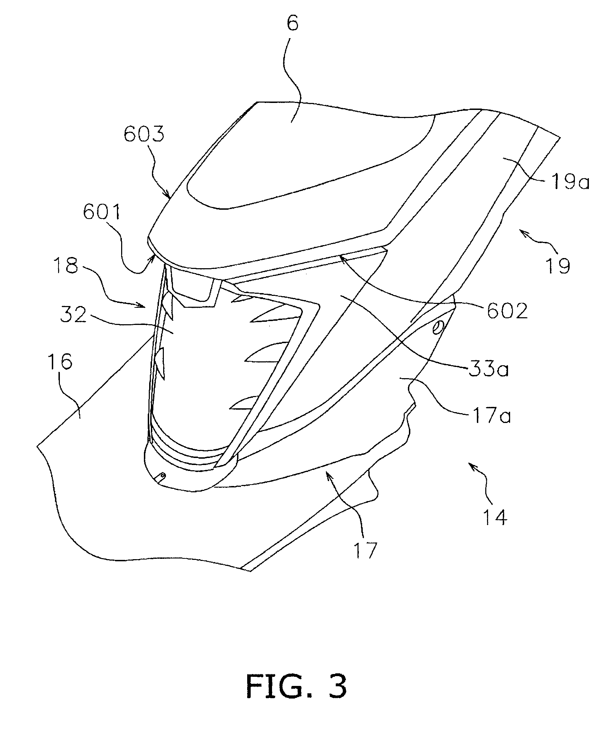

FIG 3 is a perspective view of a portion of the rear portion cover 14. FIG. 4 is a side view of the structure of the rear portion cover 14 and the surrounding thereof. It should be noted that FIG 4 omits illustration of the seat 6. FIG 5 is a front view of the structure of the rear portion cover 14 and the surrounding thereof. The rear portion cover 14 includes a side under cover 17, a front cover 18 and a side cover 19.

The side under cover 17 is disposed behind the footboard 16. The side under cover 17 is connected to the rear portion of the footboard 16. The side under cover 17 is integrally formed with the footboard 16. In a side view, the side under cover 17 is disposed in front of the engine unit 7. As illustrated in FIG 5, the side under cover 17 includes a left side under cover 17a and a right side under cover 17b. The left side under cover 17a and the right side under cover 17b are disposed away from each other in the vehicle transverse direction. As illustrated in FIG. 4, an upper edge section 171 of the left side under cover 17a is extended obliquely upwards and rearwards in a side view. A lower edge section 172 of the left side under cover 17a is connected to the footboard 16. A rear edge section 173 of the left side under cover 17a is extended obliquely upwards and rearwards. A left tandem footrest 31 a is disposed under the rear edge section of the left side under cover 17a for allowing a tandem rider to put thereon one's foot. Similarly, a right tandem footrest 31 b (see FIG. 5) is disposed under a rear edge section of the right side under cover 17b for allowing the tandem rider to put thereon one's foot. The right side under cover 17b includes a shape bilaterally symmetrical to that of the left side under cover 17a. Therefore, detailed explanation of the right side under cover 17b will be hereinafter omitted.

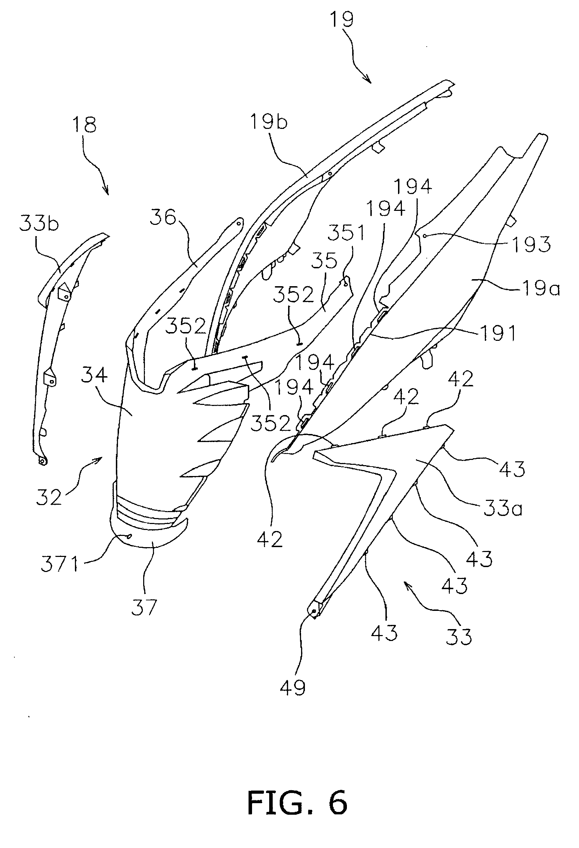

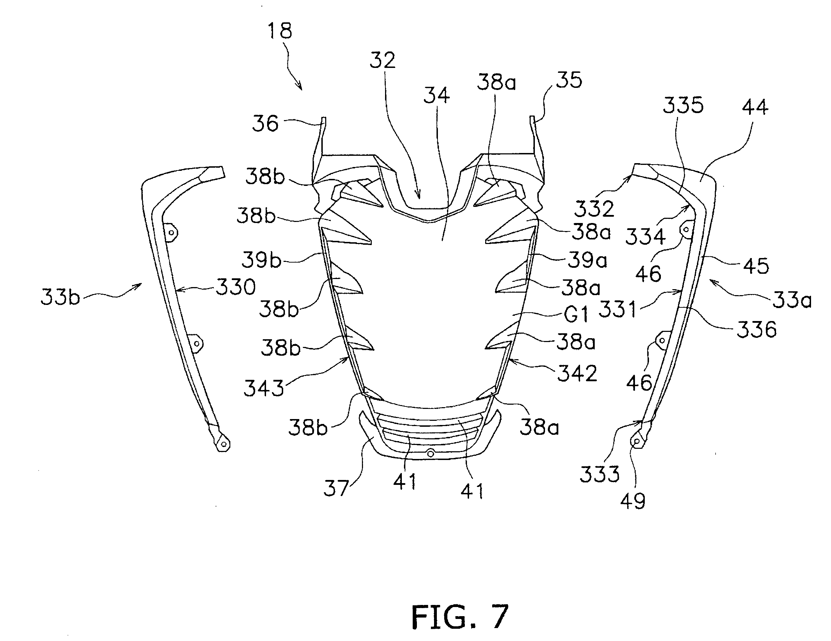

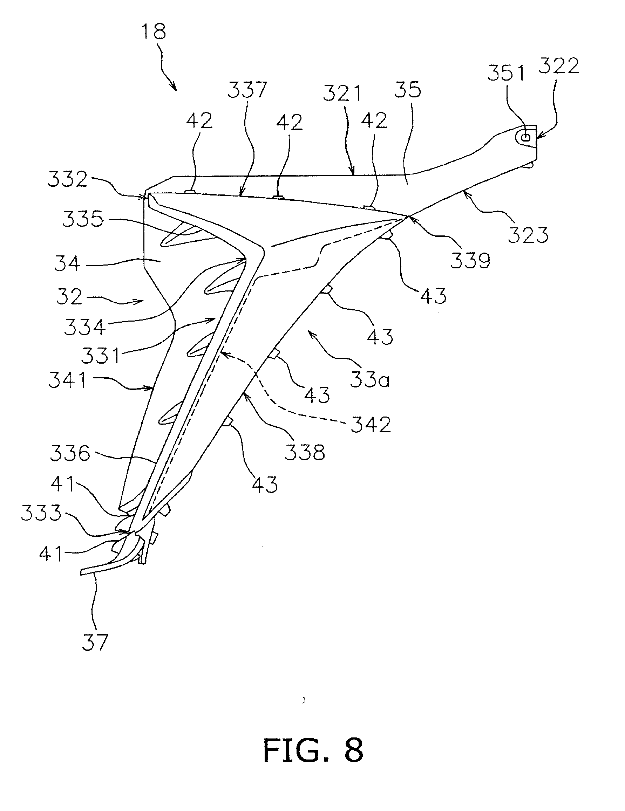

The front cover 18 is disposed between the seat 6 and the footboard 16 in the up-and-down direction. FIG. 6 is an exploded perspective view of the front cover 18 and the side cover 19. FIG 7 is an exploded front view of the front cover 18. FIG. 8 is a side view of the front cover 18. The front cover 18 is detachably attached to the side cover 19. The front cover 18 includes a first front cover portion 32 and a second front cover portion 33. Further, the second front cover portion 33 includes a left front cover 33a and a right front cover 33b.

The first front cover portion 32 is disposed under the seat 6. The first front cover portion 32 is disposed while passing through the vehicle-transversely vehicle center (see C1 in FIG 2) extended in the back-and-forth direction. The first front cover portion 32 is shaped for extending in the vehicle transverse direction, and simultaneously, for extending rearwards. As illustrated in FIG 6, the first front cover portion 32 includes a front cover front face portion 34, a front cover left rear portion 35, a front cover right rear portion 36 and a front cover bottom portion 37. The first front cover portion 32 covers a region between the seat 6 and the footboard 16.

The front cover front face portion 34 is disposed for passing through the aforementioned vehicle center (see C1 in FIG 2). At least a portion of the front cover front face portion 34 is disposed in front of the engine unit 7. In other words, at least a portion of the front cover front face portion 34 is overlapped with the engine unit 7 in a front view. The front cover front face portion 34 includes a forwardly curved convex shape. As illustrated in FIG 8, the front cover front face portion 34 includes a front edge section 341. In a side view, the front edge section 341 includes a backwardly recessed shape.

As illustrated in FIG 7, the front cover front face portion 34 includes a plurality of fins 38a and 38b. In a front view, the fins 38a and 38b are disposed for extending in the vehicle transverse direction. The fins 38a and 38b are forwardly protruded from the surface of the front cover front face portion 34. Specifically the front cover front face portion 34 includes a plurality of left fins 38a and a plurality of right fins 38b. In a front view, the plural left fins 38a are extended laterally inwards from a left-side edge section 342 of the front cover front face portion 34. The plural left fins 38a are aligned in the up-and-down direction. The plural left fins 38a are disposed away from each other in the up-and-down direction. In a front view, the plural left fins 38a are tapered laterally inwards. In a front view, the plural right fins 38b are extended laterally inwards from a right-side edge section 343 of the front cover front face portion 34. The plural right fins 38b are aligned in the up-and-down direction. The plural right fins 38b are disposed away from each other in the up-and-down direction. In a front view, the plural right fins 38b are tapered laterally inwards.

The front cover front face portion 34 includes wall portions 39a and 39b. The wall portions 39a and 39b are forwardly protruded from the surface of the front cover front face portion 34. Specifically, the front cover front face portion 34 includes left wall portions 39a and right wall portions 39b. The left wall portions 39a are disposed along the left-side edge section 342 of the front cover front face portion 34. The left wall portions 39a are disposed among the plural left fins 38a. It should be noted that the left wall portions 39a are not disposed among all the left fins 38a, and therefore, the front cover front face portion 34 includes a clearance portion G1 where the left wall portion 39a is not disposed. The right wall portions 39b are disposed along the right-side edge section 343 of the front cover front face portion 34. The right wall portions 39b are disposed among the right fins 38b. The right wall portions 39b are disposed among all the right fins 38b.

The front cover front face portion 34 includes transverse recesses 41. The transverse recesses 41 are formed in the lower portion of the front cover front face portion 34. The transverse recesses 41 are extended in the vehicle transverse direction. The transverse recesses 41 are formed from the left-side edge section 342 to the right-side edge section 343 of the front cover front face portion 34.

The front cover left rear portion 35 is backwardly extended from the upper portion of the front cover front face portion 34. As illustrated in FIG. 6, the front cover left rear portion 35 includes an aperture 351. A screw is inserted through the aperture 351 for fixing the front cover left rear portion 35 to the side cover 19. The front cover left rear portion 35 includes a plurality of slits 352. Upper side protrusions 42 (to be described) of the left front cover 33a are fitted into the slits 352. The front cover right rear portion 36 includes a shape bilaterally symmetrical to the front cover left rear portion 35. Therefore, detailed explanation of the front cover right rear portion 36 will be omitted. The front cover bottom portion 37 is forwardly protruded from the bottom portion of the front cover front face portion 34. The front cover bottom portion 37 includes a plate shape extended in the back-and-forth direction and the vehicle transverse direction. The front cover bottom portion 37 includes an aperture 371. A screw is inserted through the aperture 371 for fixing the first front cover portion 32 to the footboard 16.

The left front cover 33a is a member provided separately from the first front cover portion 32. The left front cover 33a is detachably attached to the first front cover portion 32. As illustrated in FIG 5, the left front cover 33a is disposed laterally outwards of the first front cover portion 32. As illustrated in FIG. 8, a front edge section 331 of the left front cover 33a is positioned forwards of the left-side edge section 342 of the front cover front face portion 34. In a side view, the left front cover 33a is disposed rearwards of the front edge section 341 of the first front cover portion 32. In a side view, the front edge section 331 of the left front cover 33a is overlapped with the first front cover portion 32. The front edge section 331 of the left front cover 33a includes a backwardly recessed shape. Specifically, the front edge section 331 of the left front cover 33a includes an upper end portion 332, a lower end portion 333 and an intermediate portion 334. The lower end portion 333 is positioned forwards of the upper end portion 332. The intermediate portion 334 is positioned between the upper end portion 332 and the lower end portion 333 in the up-and-down direction. The intermediate portion 334 is positioned rearwards of the upper end portion 332 and the lower end portion 333. The intermediate portion 334 is disposed closer to the upper end portion 332 than to the lower end portion 333 in the up-and-down direction. In other words, distance between the upper end portion 332 and the intermediate portion 334 is less than that between the intermediate portion 334 and the lower end portion 333 in the up-and-down direction.

The front edge section 331 of the left front cover 33a includes an upper front edge section 335 and a lower front edge section 336. The upper front edge section 335 is extended from the upper end portion 332 towards the intermediate portion 334. The upper front edge section 335 is extended obliquely downwards and rearwards. The lower front edge section 336 is disposed under the upper front edge section 335. The lower front edge section 336 is extended form the intermediate portion 334 towards the lower end portion 333. The lower front edge section 336 is extended obliquely downwards and forwards.

An upper edge section 337 of the left front cover 33a is extended rearwards. More specifically, the upper edge section 337 of the left front cover 33a is extended obliquely downwards and rearwards. In a side view, the upper edge section 337 of the left front cover 33a is positioned lower than an upper edge section 321 of the first front cover portion 32. As illustrated in FIGS. 6 and 8, the left front cover 33a includes the plural upper side protrusions 42. The plural upper side protrusions 42 are aligned along the upper edge section 337 of the left front cover 33a. The left front cover 33a is detachably attached to the first front cover portion 32 by fitting the upper side protrusions 42 into the slits 352.

A lower edge section 338 of the left front cover 33a is extended obliquely upwards and rearwards. In a side view, the lower edge section 338 of the left front cover 33a is positioned rearwards of the left-side edge section 342 of the front cover front face portion 34. Therefore, a portion of the left front cover 33a is positioned rearwards of the first front cover portion 32. The left front cover 33a includes a plurality of rear side protrusions 43. The plural rear side protrusions 43 are aligned along the lower edge section 338 of the left front cover 33a. The left front cover 33a is detachably attached to a left side cover 19a to be described by fitting the rear side protrusions 43 into apertures 194 of the left side cover 19a.

In a side view, a rear end portion 339 of the left front cover 33a is positioned on the intersection between the upper edge section 337 and the lower edge section 338 of the left front cover 33a. The rear end portion 339 of the left front cover 33a is disposed higher than the intermediate portion 334 of the front edge section. The rear end portion 339 of the left front cover 33a is disposed forwards of a rear end portion 322 of the first front cover portion 32. In a side view, the rear end portion 339 of the left front cover 33a is disposed on a lower edge section 323 of the front cover left rear portion 35.

As illustrated in FIG 7, the front edge section 331 of the left front cover 33a includes a shape recessed laterally outwards. Specifically, the aforementioned intermediate portion 334 is disposed laterally outwards of the upper end portion 332. The intermediate portion 334 is disposed laterally outwards of the lower end portion 333. In a front view, the upper front edge section 335 is slanted downwards and laterally outwards. In a front view, the lower front edge section 336 is slanted upwards and laterally outwards. Further, the left front cover 33a includes a first surface portion 44 and a second surface portion 45. The first surface portion 44 is slanted downwards and laterally outwards. The second surface portion 45 is disposed under the first surface portion 44. The second surface portion 45 is slanted upwards and laterally outwards.

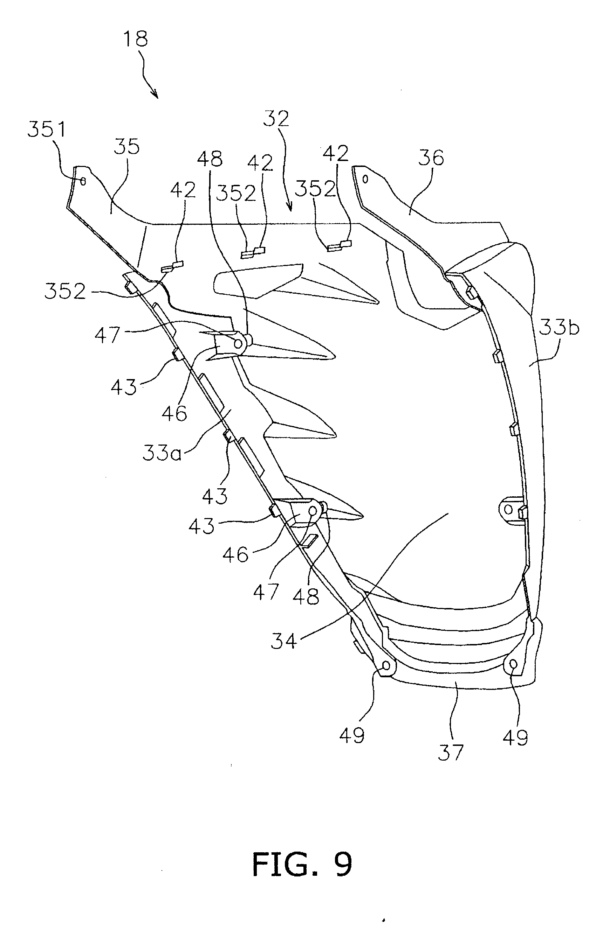

FIG 9 is a diagram of the front cover 18 seen from an obliquely rear side. As illustrated in FIG 9, the left front cover 33a includes a plurality of protruding portions 46. The protruding portions 46 are disposed on the inner surface of the left front cover 33a. The protruding portions 46 are protruded from the inner surface of the left front cover 33a. The left front cover 33a is detachably attached at the protruding portions 46 to the first front cover portion 32. Each protruding portion 46 includes an aperture that a screw is passed therethrough. Further, the first front cover portion 32 includes a plurality of bosses 48. The bosses 48 are disposed on the rear surface of the first front cover portion 32. The left front cover 33a is detachably attached to the first front cover portion 32 by inserting screws through the apertures 47 of the protruding portions 46 and apertures of the bosses 48 (not illustrated in the figures). Further, the left front cover 33a includes an aperture 49 in the lower portion thereof. The first front cover portion 32 includes apertures (not illustrated in the figures) in the front cover bottom portion 37 thereof. The left front cover 33a is detachably attached to the first front cover portion 32 by inserting a screw through the aperture 49 in the lower portion of the left front cover 33a and the aperture of the front cover bottom portion 37. The right front cover 33b includes a shape bilaterally symmetrical to the left front cover 33a. Therefore, detailed explanation of the right front cover 33b will be omitted.

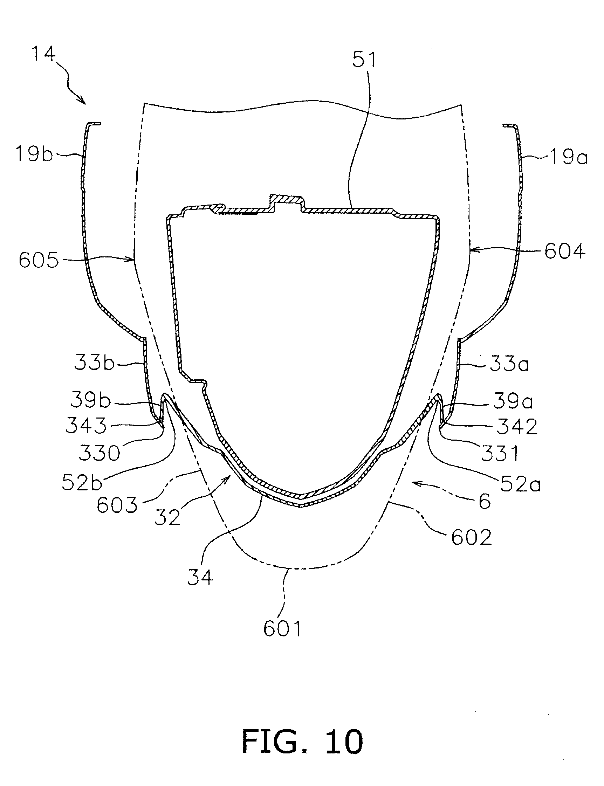

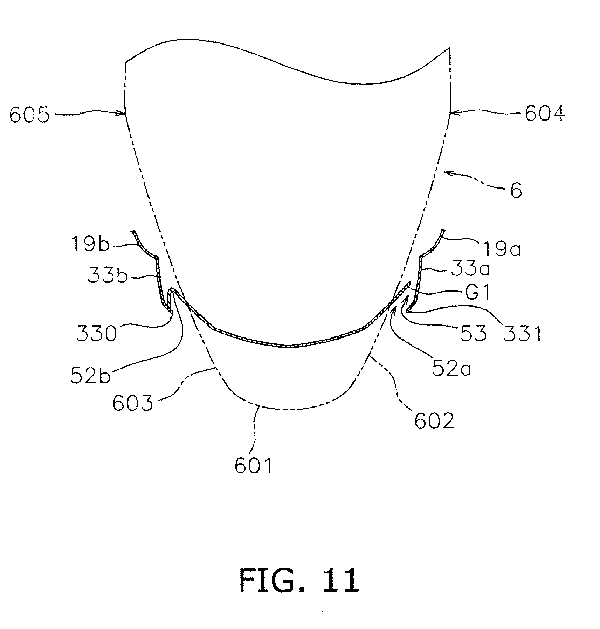

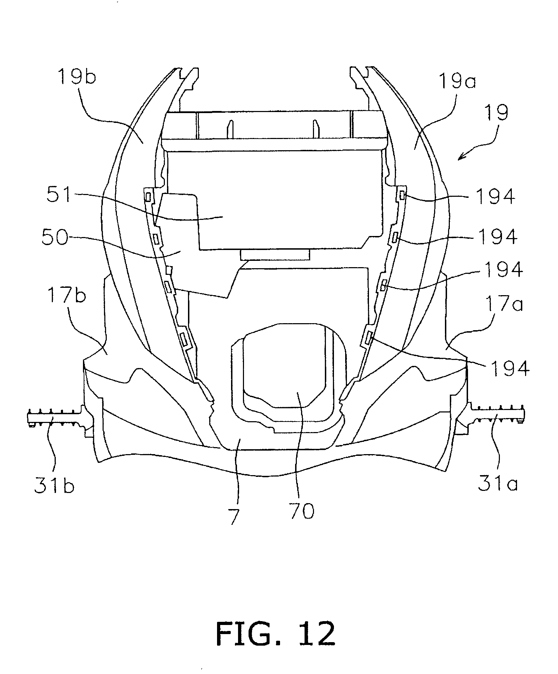

FIG 10 is a view of an X-X cross-section in FIG. 5. FIG 11 is a view of an XI-XI cross-section in FIG 5. FIG 12 is a front view of a state that the front cover 18 is detached from the side cover 19. In FIGS. 10 and 11, the position of the seat 6 is conceptually depicted with a dashed two-dotted line. As illustrated in FIGS. 10 and 12, an electric component 50 and the accommodation portion 51 are disposed in the inner space of the rear portion cover 14. The electric component 50 and the accommodation portion 51 are disposed under the seat 6. The electric component 50 includes, for instance, an ECU (electronic control unit) and a battery.

As illustrated in FIGS. 10 and 11, the front edge section 331 of the left front cover 33a is extended laterally inwards, while being overlapped with the front cover portion 32 in a front view. Similarly, a front edge section 330 of the right front cover 33b is extended laterally inwards, while being overlapped with the first front cover portion 32 in a front view.

Further, the front cover 18 includes a left recessed portion 52a and a right recessed portion 52b. The left recessed portion 52a is disposed laterally inwards of the front edge section 331 of the left front cover 33a. The right recessed portion 52b is disposed laterally inwards of the front edge section 330 of the right front cover 33b. The left recessed portion 52a is extended in the up-and-down direction along the aforementioned front edge section 331 of the left front cover 33a. The right recessed portion 52b is extended in the up-and-down direction along the aforementioned front edge section 330 of the right front cover 33b. Specifically, the left recessed portion 52a and the right recessed portion 52b are included in the first front cover portion 32. The left recessed portion 52a is disposed between the surface of the aforementioned front cover front face portion 34 and the left wall portions 39a. The right recessed portion 52b is disposed between the surface of the aforementioned front cover front face portion 34 and the right wall portions 39b. The aforementioned left fins 38a are partially disposed in the left recessed portion 52a. The left fins 38a divide the left recessed portion 52a into a plurality of paths. The aforementioned right fins 38b are partially disposed in the right recessed portion 52b. The right fins 38b divide the right recessed portion 52b into a plurality of paths.

As illustrated in FIG 11, the left recessed portion 52a includes an aperture 53 formed therein for communicating with the space where the engine unit 7 is disposed. The aperture 53 is disposed between the aforementioned clearance portion G1 of the first front cover portion 32 and the front edge section 331 of the left front cover 33a. In other words, the aperture 53 is formed at least in one of the plural paths divided by the left fins 38a. As illustrated in FIG 5, in the present exemplary embodiment, the aperture 53 is formed in a path P1 (hereinafter referred to as "a first path P1") between the third one and the second one of the left fins 38a from the bottom. It should be noted that as illustrated in FIG. 10, the left wall portion 39a and the front edge section 331 of the left front cover 33a are adjacently disposed in a path PO positioned immediately higher than the first path P1, and therefore, no aperture is formed in the path P0. Further, no aperture is formed in a path P2 (hereinafter referred to as "a second path P2") positioned lower than the first path P1. The second path P2 is positioned lowest in the plural paths divided by the left fins 38a. More specifically, no aperture is formed in the paths except for the first path P1 in the present exemplary embodiment. In other words, no aperture is formed in any of the plural paths divided by the right fins 38b. In a front view, the aperture 53 is disposed for overlapping with the left front cover 33a. Therefore, the aperture 53 does not externally appear in a front view. As illustrated in FIG. 5, the aperture 53 is positioned higher than a cylinder head 70 of the engine unit 7.

As illustrated in FIG. 3, the left front cover 33a is positioned under the seat left-side edge section 602. Further, in the cross-sectional view of FIG 10, the left front cover 33a is positioned laterally outwards of the seat left-side edge section 602. Therefore, the left front cover 33a is at least partially positioned laterally outwards of the seat left-side edge section 602. Further, in the cross-sectional view of FIG 10, the left front cover 33a is positioned laterally inwards of a left-side end section 604 of the seat 6. Therefore, the left front cover 33a is at least partially positioned laterally inwards of the left-side end section 604 of the seat 6. The left-side end section 604 is a leftmost section positioned in the seat 6. Similarly to the left front cover 33a, the right front cover 33b is also positioned under the seat right-side edge section 603 in a side view. The right front cover 33b is at least partially positioned laterally outwards of the seat right-side edge section 603. Further, the right front cover 33b is at least partially positioned laterally inwards of a right-side end section 605 of the seat 6. The right-side end section 605 is a rightmost section positioned in the seat 6.

Further, in the cross-sectional view of FIG 10, the left-side edge section 342 of the first front cover portion 32 is positioned laterally outwards of the seat left-side edge section 602. Further, the right-side edge section 343 of the first front cover portion 32 is positioned laterally outwards of the seat right-side edge section 603. Therefore, the first front cover portion 32 is at least partially positioned laterally outwards of the seat left-side edge section 602. Further, the first front cover portion 32 is at least partially positioned laterally outwards of the seat right-side edge section 603.

As illustrated in FIG. 1, a tail lamp 20 is attached to the side cover 19. As illustrated in FIG. 6, the side cover 19 includes the left side cover 19a and a right side cover 19b. As illustrated in FIG. 4, the left side cover 19a is disposed behind the front cover 18 in a side view. The left side cover 19a is disposed laterally outwards of the engine unit 7. The left side cover 19a is a member formed separately from the front cover 18. In a side view, the front portion of the left side cover 19a is positioned under the left front cover 33a. An upper edge section 191 of the front portion of the left side cover 19a is disposed adjacently to the lower edge section 338 of the left side cover 19a. A lower edge section 192 of the front portion of the left side cover 19a is disposed adjacently to the upper edge section 171 of the left side under cover 17a. The left tandem footrest 31 a is disposed under the front portion of the left side cover 19a. The left side cover 19a includes an aperture 193 in the upper portion thereof. The aperture 193 of the left side cover 19a is disposed in a position overlapped with the aperture 351 of the front cover left rear portion 35. Further, the accommodation portion 51 also includes an aperture (not illustrated in the figures). The aperture of the accommodation portion 51 is disposed in a position overlapped with the aperture 193 of the left side cover 19a. The left side cover 19a and the first front cover portion 32 are detachably attached to the accommodation portion 51 by inserting a screw through the aperture 193 of the left side cover 19a, the aperture 351 of the front cover left rear portion 35 and the aperture of the accommodation portion 51.

As illustrated in FIG 5, the front portion of the left side cover 19a is positioned laterally outwards of the left front cover 33a. As illustrated in FIG 6, the front portion of the left side cover 19a includes the plural apertures 194. The plural apertures 194 are aligned along the upper edge section 191 of the front portion of the left side cover 19a. The left front cover 33a is detachably attached to the left side cover 19a by fitting the rear side protrusions 43 of the left front cover 33a into the apertures 194 of the left side cover 19a. The right side cover 19b includes a shape bilaterally symmetrical to the left side cover 19a. Therefore, detailed explanation of the right side cover 19b will be omitted.

The saddle-ride type vehicle 1 according to the present exemplary embodiment has the following features.

The front cover 18 is detachably attached to the side cover 19. Therefore, the front cover 18 can be easily detached from the side cover 19. As illustrated in FIG 12, the engine unit 7 is disposed behind the front cover 18. Further, an opening is formed while being enclosed by the seat 6, the side cover 19, and the footboard 16. The front cover 18 covers the opening. In other words, the first front cover portion 32 and the second front cover portion 33 cover the opening. Therefore, as illustrated in FIG. 12, the opening for a maintenance work of the engine unit 7 appears when the front cover 18 is detached from the side cover 19. In other words, the opening for a maintenance work appears when the first front cover portion 32 and the second front cover portion 33 are detached from the side cover 19. Therefore, a large opening for a maintenance work can be reliably produced while the first front cover portion 32 can be reduced in its size. Further, the left front cover 33a is at least partially overlapped with the first front cover portion 32 in a side view. Yet further, the right front cover 33b is at least partially overlapped with the first front cover portion 32 in a side view. In other words, the front cover 18 includes a shape that the first front cover portion 32 and the second front cover portion 33 are partially overlapped. Accordingly, the front cover 18 can be enhanced in its stiffness. Moreover, the first front cover portion 32, having chances of being hit by a rider's foot, can be protected by the second front cover 33.

Further, the opening for a maintenance work can be reliably produced in a large size. Therefore, degradation in accessibility to the engine unit 7 can be inhibited. Yet further, the front edge section 331 of the left front cover 33a and the front edge section 330 of the right front cover 33b respectively have a backwardly recessed shape. Therefore, such a situation can be inhibited that the space for allowing a rider to put therein one's feet is reduced by the left front cover 33a and the right front cover 33b. Accordingly, degradation in rider's comfortableness can be inhibited.

Especially, in the saddle-ride type vehicle equipped with the unit swing that the engine unit 7 and the rear wheel 8 pivot up and down, it is desirable to enlarge the space between the left side cover 19a and the right side cover 19b. However, when the space between the left side cover 19a and the right side cover 19b is enlarged, a drawback is produced that the front cover 18 is reduced in its stiffness due to increase in size of the front cover 18. However, in the saddle-ride type vehicle 1 according to the present exemplary embodiment, the front cover 18 includes the first front cover portion 32 and the second front cover portion 33. Therefore, it is possible to inhibit reduction in stiffness of the front cover 18 even when the space between the left side cover 19a and the right side cover 19b is enlarged.

The front edge section 331 of the left front cover 33a and the front edge section 330 of the right front cover 33b respectively have a shape recessed laterally outwards. Therefore, the space for allowing a rider to put therein one's feet can be reliably produced in a large size.

The left front cover 33a is at least partially positioned laterally outwards of the seat left-side edge section 602, while being positioned under the seat left-side edge section 602 in a side view. Further, the right front cover 33b is at least partially positioned laterally outwards of the seat right-side edge section 603, while being positioned under the seat right-side edge section 603 in a side view. Therefore, it is possible to reliably produce a large width between the left front cover 33a and the right front cover 33b in the vehicle transverse direction. Accordingly, it is possible to reliably produce a large width of the opening for a maintenance work in the vehicle transverse direction. Further, the space for allowing a rider to put therein one's feet can be reliably produced in a large size.

The left front cover 33a is disposed laterally on the left side of the first front cover portion 32, whereas the right front cover 33b is disposed laterally on the right side of the first front cover portion 32. Therefore, the first front cover portion 32, having chances of being hit by rider's feet, can be protected by the second front cover portion 33.

The front cover 18 includes the left recessed portion 52a and the right recessed portion 52b. Therefore, the front cover 18 can be further enhanced in its stiffness with the left recessed portion 52a and the right recessed portion 52b. Especially, the left recessed portion 52a and the right recessed portion 52b are extended in the up-and-down direction. Therefore, the front cover 18 can be enhanced in its stiffness with respect to vertical bending.

The front cover 18 includes the aperture 53 communicated to the inner space in which the engine unit 7 is accommodated. Therefore, the engine unit 7 can be enhanced in its cooling efficiency by the air stream flowing through the aperture 53 of the front cover 18. Further, the aperture 53 is disposed for overlapping with the second front cover portion 33. Foreign substance, such as a trash and water, can be thereby inhibited from entering through the aperture 53. Yet further, the aperture 53 is positioned higher than the cylinder head 70. The engine unit 7 can be thereby further enhanced in its cooling efficiency.

The front cover 18 includes the left fins 38a and the right fins 38b. Therefore, the front cover 18 can be further enhanced in its stiffness with the left fins 38a and the right fins 38b. Especially, the left fins 38a and the right fins 38b are extended in the vehicle transverse direction. Therefore, the front cover 18 can be enhanced in its stiffness with respect to transverse bending. Further, the air stream flowing through the aperture 53 is guided by the left fins 38a. The engine unit 7 can be thereby enhanced in its cooling efficiency.

The second path P2 and the third path P3, positioned lower than the first path P1, have no aperture. Therefore, water intrusion through an aperture can be inhibited. Accordingly, water intrusion into the accommodation portion 51 can be inhibited.

The left front cover 33a and the right front cover 33b are members provided separately from the first front cover portion 32. Therefore, the front cover 18 can be easily formed even when having a complex shape.

The second front cover portion 33 is partially positioned rearwards of the first front cover portion 32. Therefore, the first front cover portion 32 can be attached to the side cover 19 through the second front cover portion 33.

The front portion of the left side cover 19a is positioned laterally outwards of the left front cover 33a. Further, the left tandem footrest 31 a is disposed under the front portion of the left side cover 19a. Similarly, the front portion of the right side cover 19b is positioned laterally outwards of the right front cover 33b. Further, the right tandem footrest 31 b is disposed under the front portion of the right side cover 19b. Therefore, a tandem rider's foot can be inhibited from hitting either the left side cover 19a or the right side cover 19b.

In a front view, the engine unit 7 at least partially appears through the opening under the condition that the front cover 18 is detached. Therefore, the engine unit 7 is easily accessed.

An exemplary embodiment has been explained above. However, the present teaching is not limited to the aforementioned exemplary embodiment, and a variety of changes can be herein made without departing from the scope of the present teaching.

The saddle-ride type vehicle is not limited to the motorcycle and includes a three wheeler, an all-terrain vehicle and a snowmobile. Further, the motorcycle is not limited to the scooter and includes a moped or a sport-type motorcycle.

The shape of the first front cover portion 32 may be changed without being limited to that in the aforementioned exemplary embodiment. The shape of the left front cover 33a and that of the right front cover 33b may be changed without being limited to those in the aforementioned exemplary embodiment. The shape of the left side cover 19a and that of the right side cover 19b may be changed without being limited to those in the aforementioned exemplary embodiment. For example, in the aforementioned exemplary embodiment, the front edge section 331 of the left front cover 33a is overlapped with the first front cover portion 32 in a front view. Further, the front edge section 330 of the right front cover 33b is overlapped with the first front cover portion 32 in a front view. In other words, the front edge section of the second front cover portion 33 is overlapped with the first front cover portion 32 in a front view. However, the front edge section of the second front cover portion 33 may not be overlapped with the first front cover portion 32 in a front view.

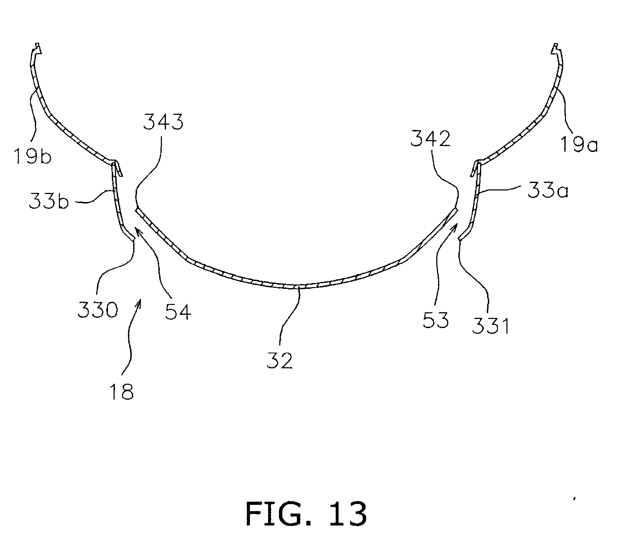

The number or position of the aperture of the front cover 18 is not limited to that in the aforementioned exemplary embodiment. For example, FIG 13 is a cross-sectional view of the front cover 18 according to a first modification. The cross-sectional view of FIG 13 illustrates a cross-section in the same position as the XI-XI cross-section in FIG 5. As illustrated in FIG 13, an aperture 54 may be formed between the right-side edge section 343 of the first front cover portion 32 and the front edge section 330 of the right front cover 33b. Alternatively, the front cover 18 may have no aperture.

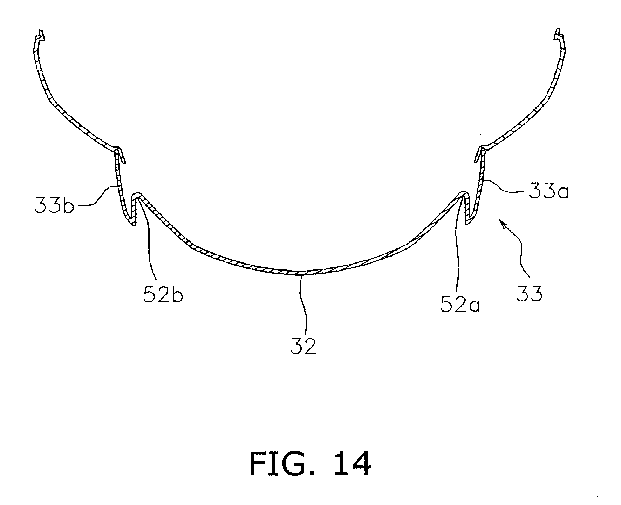

In the aforementioned exemplary embodiment, the left front cover 33a and the right front cover 33b are respectively members provided separately from the first front cover portion 32. In other words, the second front cover portion 33 is a member provided separately from the first front cover portion 32. However, the second front cover portion 33 may be integrated with the first front cover portion 32. For example, FIG. 14 is a cross-sectional view of the front cover 18 according to a second modification. The cross-sectional view of FIG 14 illustrates a cross-section in the same position as the XI-XI cross-section in FIG 5. As illustrated in FIG 14, the left front cover 33a and the right front cover 33b are integrated with the first front cover portion 32. In other words, the second front cover portion 33 is integrated with the first front cover portion 32. In this case, the front cover 18 can be also formed in a shape that the first front cover portion 32 and the second front cover portion 33 are partially overlapped. It should be noted that no aperture is formed in FIG 14, but either the aperture 53 similar to that in the aforementioned exemplary embodiment or the apertures 53 and 54 in the first modification may be formed therein.

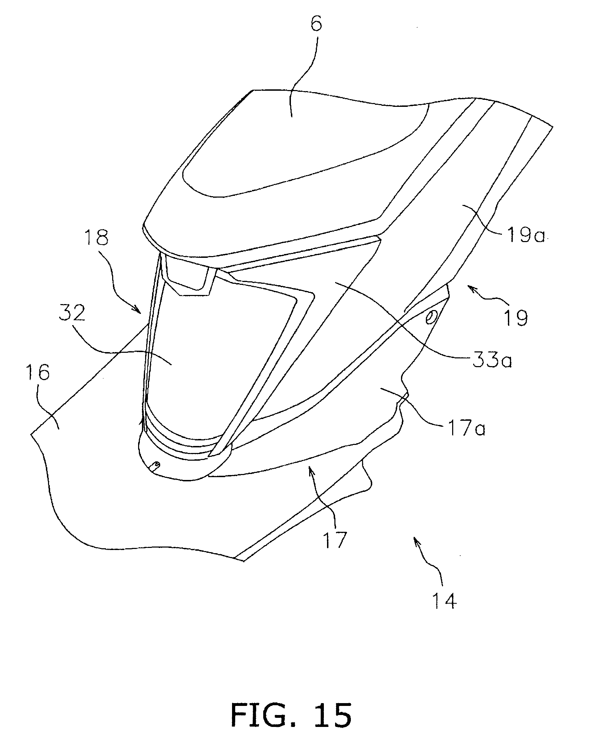

The number or shape of the left fins 38a and that of the right fins 38b in the first front cover portion 32 are not limited to those in the aforementioned exemplary embodiment. For example, the left fins 38a and the right fins 38b may be omitted as seen in the front cover 18 according to a third modification illustrated in FIG. 15. Further, in the aforementioned exemplary embodiment, the left fins 38a are partially disposed in the left recessed portion 52a while the right fins 38b are partially disposed in the right recessed portion 52b. However, the left fins 38a may be entirely disposed in the left recessed portion 52a. The right fins 38b may be entirely disposed in the right recessed portion 52b.

In the aforementioned exemplary embodiment, the recessed portions 52a and 52b are included in the first front cover portion 32, but may be included in the second front cover portion 33. Alternatively, the recessed portions 52a and 52b may be formed across the first front cover portion 32 and the second front cover portion 33. In other words, the first front cover portion 32 and/or the second front cover portion 33 may include the recessed portions 52a and 52b.

### Industrial Applicability

The present teaching can provide a saddle-ride type vehicle whereby degradation in accessibility to an engine unit and degradation in rider's comfortableness can be inhibited, and simultaneously, stiffness of a front cover can be enhanced.

### Reference Signs List

- 2: Vehicle body frame
- 6: Seat
- 7: Engine unit
- 16: Footboard
- 18: Front cover
- 19: Side cover
- 31a, 31b: Tandem footrest
- 32: First front cover portion
- 33: Second front cover portion
- 38a, 38b: Fin
- 52a, 52b: Recessed portion
- 53: Aperture
- 70: Cylinder head
- 601: Seat front edge section
- 602: Seat left-side edge section
- 603: Seat right-side edge section
- P1-P3: Path

## Claims

1. A saddle-ride type vehicle, comprising:
a vehicle body frame (2);
a seat (6) supported by the vehicle body frame (2);
an engine unit (7) supported by the vehicle body frame (2), the engine unit (7) disposed under the seat (6);
a footboard (16) disposed forwards of and lower than the seat (6), the footboard (16) disposed in front of the engine unit (7);
a front cover (18) disposed between the seat (6) and the footboard (16) in a vehicle up-and-down direction, the front cover (18) at least partially disposed in front of the engine unit (7); and
a side cover (19) disposed behind the front cover (18) in a vehicle side view, the side cover (19) disposed laterally outwards of the engine unit (7), the side cover (19) formed separately from the front cover (18),
wherein the front cover (18) includes a first front cover portion (32) and a second front cover portion (33),
the first front cover portion (32) is disposed under the seat (6), the first front cover portion (32) is shaped for extending in a vehicle transverse direction while passing through a vehicle center in the vehicle transverse direction and for extending rearwards,
the second front cover portion (33) is disposed outwardly lateral to the first front cover portion (32) while being disposed rearwards of a front edge section of the first front cover portion (32) in the vehicle side view, **characterized in that** a front edge section of the second front cover portion (33) is overlapped with the first front cover portion (32) in the vehicle side view, and
the front edge section of the second front cover portion (33) includes a backwardly recessed shape.

2. A saddle-ride type vehicle according to claim 1, **characterized in that** the front edge section of the second front cover portion (33) includes a shape recessed laterally outwards.

3. A saddle-ride type vehicle according to claim 1 or 2, **characterized in that** the seat (6) includes: a seat front edge section (601); a seat left-side edge section (602) extended obliquely rearwards and leftwards from the seat front edge section (601); and a seat right-side edge section (603) extended obliquely rearwards and rightwards from the seat front edge section (601),
the second front cover portion (33) includes a left front cover (33a) and a right front cover (33b),
the left front cover (33a) is at least partially positioned laterally outwards of the seat left-side edge section (602) while being at least partially positioned under the seat left-side edge section (602) in a side view, and
the right front cover (33b) is at least partially positioned laterally outwards of the seat right-side edge section (603) while being at least partially positioned under the seat right-side edge section (603) in a side view.

4. A saddle-ride type vehicle according to one of the claims 1 to 3, **characterized in that** the front edge section of the second front cover portion (33) is overlapped with the first front cover portion (32) in a front view.

5. A saddle-ride type vehicle according to one of the claims 1 to 3, **characterized in that** the front cover (18) includes a recessed portion (52a,52b), the recessed portion (52a,52b) disposed inwardly lateral to the front edge section of the second front cover portion (33) and extended along the front edge section of the second front cover portion (33).

6. A saddle-ride type vehicle according to claim 5, **characterized in that** the recessed portion (52a,52b) includes an aperture (53) formed for communicating with a space for disposing therein the engine unit (7).

7. A saddle-ride type vehicle according to claim 6, **characterized in that** the front cover (18) includes a plurality of fins (38a,38b), the fins (38a,38b) at least partially disposed in the recessed portion (52a,52b), the fins (38a,38b) extended in the vehicle transverse direction,
the fins (38a,38b) are disposed at intervals in the vehicle up-and-down direction and divide the recessed portion (52a,52b) into a plurality of paths (P1-P3), and
at least one of the paths (P1) includes the aperture (53) communicated with the space for disposing therein the engine unit (7).

8. A saddle-ride type vehicle according to claim 7, **characterized in that** the paths (P1-P3) include a first path (P1) and a second path (P2) positioned lower than the first path (P1), the first path (P1) includes the aperture (53) communicated with the space for disposing therein the engine unit (7), and the second path (P2) includes no aperture formed therein.

9. A saddle-ride type vehicle according to one of the claims 6 to 8, **characterized in that** the aperture (53) is disposed for overlapping with the second front cover portion (33) in a vehicle front view.

10. A saddle-ride type vehicle according to one of the claims 5 to 9, **characterized in that** the engine unit (7) includes a cylinder head (70) disposed behind the front cover (18), and the aperture (53) is positioned higher than the cylinder head (70).

11. A saddle-ride type vehicle according to one of the claims 1 to 10, **characterized in that** the second front cover portion (33) is a member provided separately from the first front cover portion (32).

12. A saddle-ride type vehicle according to one of the claims 1 to 11, **characterized in that** the second front cover portion (33) is partially positioned rearwards of the first front cover portion (32), and the second front cover portion (33) is attached to the side cover (19).

13. A saddle-ride type vehicle according to one of the claims 1 to 12, **characterized by**:
a tandem footrest (31 a,31 b) allowing a tandem rider to put thereon one's foot,
wherein the side cover (19) includes a front portion positioned under and laterally outwards of the second front cover portion (33), and the tandem footrest (31 a,31 b) is disposed under the front portion of the side cover (19).

14. A saddle-ride type vehicle according to one of the claims 1 to 13, **characterized in that** the seat (6), the side cover (19) and the footboard (16) form an opening enclosed thereby, and the front cover (18) covers the opening.

15. A saddle-ride type vehicle according to one of the claims 1 to 14, **characterized in that** the engine unit (7) is at least partially viewable through the opening in a front view while the front cover (18) is detached.

## Patentansprüche

1. Ein Sattel-Reit-Typ-Fahrzeug mit:
einem Fahrzeugrahmen (2);
einen Sitz (6) gelagert durch den Fahrzeugrahmen (2);
eine Motoreinheit (7) gelagert durch den Fahrzeugrahmen (2), die Motoreinheit (7) ist unter dem Sitz (6) angeordnet;
einen Fußtritt (16) angeordnet vor und niedriger als der Sitz (6), der Fußtritt (16) ist vor der Motoreinheit (7) angeordnet;
eine Frontabdeckung (18) angeordnet zwischen dem Sitz (6) und dem Fußtritt (16) in einer Fahrzeug Oben-und-Unten-Richtung, die Frontabdeckung (18) ist zumindest teilweise vor der Motoreinheit (7) angeordnet; und
eine Seitenabdeckung (19) angeordnet hinter der Frontabdeckung (18) in einer Fahrzeugseitenansicht, die Seitenabdeckung (19) ist lateral auswärts von der Motoreinheit (7) angeordnet, die Seitenabdeckung (19) ist getrennt von der Frontabdeckung (18) gebildet,
wobei die Frontabdeckung (18) einen ersten Frontabdeckungsabschnitt (32) und einen zweiten Frontabdeckungsabschnitt (33) beinhaltet,
der erste Frontabdeckungsabschnitt (32) ist unter dem Sitz (6) angeordnet, der erste Frontabdeckungsabschnitt (32) ist für eine Erstreckung in Fahrzeugquerrichtung, während er durch die Fahrzeugmitte des Fahrzeugs in Querrichtung hindurchtritt und zur Erstreckung nach hinten gebildet,
der zweite Frontabdeckungsabschnitt (33) ist auswärts lateral zu dem ersten Frontabdeckungsabschnitt (32) angeordnet, während er hinter einem Frontkantenabschnitt des ersten Frontabdeckungsabschnitts (32) in der Fahrzeugseitenansicht angeordnet ist, **dadurch gekennzeichnet, dass** ein Frontkantenabschnitt des zweiten Frontabdeckungsabschnitts (33) mit dem ersten Frontabdeckungsabschnitt (32) in der Seitenansicht des Fahrzeugs überlappt, und der Frontkantenabschnitt des zweiten Frontabdeckungsabschnitt (33) eine nach hinten ausgenommene Form beinhaltet.

2. Ein Sattel-Reit-Typ-Fahrzeug gemäß Anspruch 1, **dadurch gekennzeichnet, dass** der Frontkantenabschnitt des zweiten Frontabdeckungsabschnitts (33) eine Form beinhaltet, die lateral nach außen ausgenommen ist.

3. Ein Sattel-Reit-Typ-Fahrzeug gemäß Anspruch 1 oder 2, **dadurch gekennzeichnet, dass** der Sitz (6) beinhaltet: einen Sitzfrontkantenabschnitt (601); einen Sitz-Links-Seiten-Kantenabschnitt (602), der sich schräg nach hinten und nach links von dem Sitzfrontkantenabschnitt (601) erstreckt; und einen Sitz-Rechts-Seiten-Kantenabschnitt (603), der sich schräg nach hinten und nach rechts von dem Sitzfrontkantenabschnitt (601) erstreckt,
der zweite Frontabdeckungsabschnitt (33) beinhaltet eine linke Frontabdeckung (33a) und eine rechte Frontabdeckung (33b),
die linke Frontabdeckung (33a) ist zumindest teilweise lateral auswärts von dem Sitz-Links-Seiten-Kantenabschnitt (602) positioniert, während diese zumindest teilweise unter dem Sitz-Links-Seiten-Kantenabschnitt (602) in einer Seitenansicht positioniert ist, und
die rechte Frontabdeckung (33b) ist zumindest teilweise lateral auswärts von dem Sitz-Rechts-Seiten-Kantenabschnitt (603) positioniert, während diese zumindest teilweise unter dem Sitz-Rechts-Seiten-Kantenabschnitt (603) in der Seitenansicht positioniert ist.

4. Ein Sattel-Reit-Typ-Fahrzeug gemäß einem der Ansprüche 1 bis 3, **dadurch gekennzeichnet, dass** der Frontkantenabschnitt des zweiten Frontabdeckungsabschnitts (33) mit dem ersten Frontabdeckungsabschnitt (32) in einer Vorderansicht überlappt.

5. Ein Sattel-Reit-Typ-Fahrzeug gemäß einem der Ansprüche 1 bis 3, **dadurch gekennzeichnet, dass** die Frontabdeckung (18) einen ausgenommenen Teil (52a, 52b) beinhaltet, der ausgenommene Teil (52a, 52b) ist lateral innen zu dem Frontkantenabschnitt des zweiten Frontabdeckungsabschnitt (33) angeordnet und erstreckt sich entlang des Frontkantenabschnitts des zweiten Frontabdeckungsabschnitts (33).

6. Ein Sattel-Reit-Typ-Fahrzeug gemäß Anspruch 5, **dadurch gekennzeichnet, dass** der ausgenommene Abschnitt (52a, 52b) eine Aussparung (53) beinhaltet, ausgebildet zur Verbindung mit einem Raum, um darin die Motoreinheit (7) anzuordnen.

7. Ein Sattel-Reit-Typ-Fahrzeug gemäß Anspruch 6, **dadurch gekennzeichnet, dass** die Frontabdeckung (18) eine Mehrzahl von Lamellen (38a, 38b) beinhaltet, die Lamellen (38a, 38b) sind zumindest teilweise in dem ausgenommenen Abschnitt (52a, 52b) angeordnet, die Lamellen (38a, 38b) erstrecken sich in Fahrzeugquerrichtung,
die Lamellen (38a, 38b) sind in Intervallen in der Fahrzeug Oben-und-Unten-Richtung angeordnet und teilen den ausgenommenen Abschnitt (52a, 52b) in eine Mehrzahl von Pfaden (P1 - P3), und zumindest einer der Pfade (P1) beinhaltet die Aussparung (53), die in Verbindung mit dem Raum ist, zur Anordnung der Motoreinheit (7).

8. Ein Sattel-Reit-Typ-Fahrzeug gemäß Anspruch 7, **dadurch gekennzeichnet, dass** die Pfade (P1 - P3) einen ersten Pfad (P1) und einen zweiten Pfad (P2), positioniert niedriger als der erste Pfad (P1), beinhaltet, der erste Pfad (P1) beinhaltet die Aussparung (53), die mit Raum zur Anordnung der Motoreinheit (7) in Verbindung ist, und der zweite Pfad (P2) beinhaltet keine darin ausgebildete Aussparung.

9. Sattel-Reit-Typ-Fahrzeug gemäß einem der Ansprüche 6 bis 8, **dadurch gekennzeichnet, dass** die Aussparung (53) zum Überlappen mit dem zweiten Frontabdeckungsabschnitt (33) in der Fahrzeugvorderansicht angeordnet ist.

10. Ein Sattel-Reit-Typ-Fahrzeug gemäß einem der Ansprüche 5 bis 9, **dadurch gekennzeichnet, dass** die Motoreinheit (7) einen Zylinderkopf (70), angeordnet hinter der Frontabdeckung (18), beinhaltet, und die Aussparung (53) ist höher als der Zylinderkopf (70) positioniert.

11. Ein Sattel-Reit-Typ-Fahrzeug gemäß einem der Ansprüche 1 bis 10, **dadurch gekennzeichnet, dass** der zweite Frontabdeckungsabschnitt (33) ein Element ist, dass getrennt von dem ersten Frontabdeckungsabschnitt (32) vorgesehen ist.

12. Ein Sattel-Reit-Typ-Fahrzeug gemäß einem der Ansprüche 1 bis 11, **dadurch gekennzeichnet, dass** der zweite Frontabdeckungsabschnitt (33) teilweise hinter dem ersten Frontabdeckungsabschnitt (32) positioniert ist, und der zweite Frontabdeckungsabschnitt (33) an der Seitenabdeckung (19) angebracht ist.

13. Ein Sattel-Reit-Typ-Fahrzeug gemäß einem der Ansprüche 1 bis 12, **gekennzeichnet durch**: einen Tandemfußtritt (31 a, 31 b), der einem Beifahrer erlaubt, seine Füße darauf zu setzen, wobei die Seitenabdeckung (19) einen Frontabschnitt beinhaltet, der unter und lateral außen von dem zweiten Frontabdeckungsabschnitt (33) positioniert ist, und der Tandemfußtritt (31 a, 31 b) ist unter dem Frontabschnitt der Seitenabdeckung (19) angeordnet.

14. Ein Sattel-Reit-Typ-Fahrzeug gemäß einem der Ansprüche 1 bis 13, **dadurch gekennzeichnet, dass** der Sitz (6), die Seitenabdeckung (19) und der Fußtritt (16) eine Öffnung bilden, die von diesen umschlossen ist, und die Frontabdeckung (18) die Öffnung abdeckt.

15. Ein Sattel-Reit-Typ-Fahrzeug gemäß einem der Ansprüche 1 bis 14, **dadurch gekennzeichnet, dass** die Motoreinheit (7) zumindest teilweise durch die Öffnung in einer Vorderrichtung sichtbar ist, während die Frontabdeckung (18) entfernt ist.

## Revendications

1. Véhicule du type à selle comprenant :
un cadre de corps de véhicule (2) ;
une selle (6) supportée par le cadre de corps de véhicule (2) ;
une unité de moteur (7) supportée par le cadre de corps de véhicule (2), l'unité de moteur (7) étant disposée en dessous de la selle (6) ;
un marchepied (16) disposé en avant de la selle (6) et en dessous de celle-ci, le marchepied (16) étant disposé devant l'unité de moteur (7) ;
un capot avant (18) disposé entre la selle (6) et le marchepied (16) dans la direction du haut et du bas du véhicule, le capot avant (18) étant disposé au moins partiellement devant l'unité de moteur (7) ; et
un capot latéral (19) disposé derrière le capot avant (18) le véhicule étant vu de côté, le capot latéral (19) étant disposé latéralement vers l'extérieur de l'unité de moteur (7), le capot latéral (19) étant formé séparément du capot avant (18),
dans lequel le capot avant (18) comporte une première partie de capot avant (32) et une seconde partie de capot avant (33),
la première partie de capot avant (32) est disposée en dessous de la selle (6), la première partie de capot avant (32) est conformée pour s'étendre dans le sens transversal du véhicule en passant par le centre du véhicule dans le sens transversal du véhicule et pour s'étendre vers l'arrière,
la seconde partie de capot avant (33) est disposée vers l'extérieur latéralement par rapport à la première partie de capot avant (32) tout en étant disposée vers l'arrière d'une section de bord avant de la première partie de capot avant (32) le véhicule étant vu de côté, **caractérisé en ce que**
une section de bord avant de la seconde partie de capot avant (33) recouvre la première partie de capot avant (32) le véhicule étant vu de côté, et
la section de bord avant de la seconde partie de capot avant (33) possède une forme en retrait vers l'arrière.

2. Véhicule du type à selle selon la revendication 1, **caractérisé en ce que** la section de bord avant de la seconde partie de capot avant (33) possède une forme latéralement en retrait vers l'extérieur.

3. Véhicule du type à selle selon la revendication 1 ou 2, **caractérisé en ce que** la selle (6) comporte :
une section de bord avant de selle (601) ; une section de bord latéral gauche de selle (602) s'étendant obliquement vers l'arrière et vers la gauche par rapport à la section de bord avant de selle (601) ; et une section de bord latéral droit de selle (603) s'étendant obliquement vers l'arrière et vers la droite par rapport à la section de bord avant de selle (601),
la seconde partie de capot avant (33) comporte un capot avant gauche (33a) et un capot avant droit (33b),
le capot avant gauche (33a) est positionné au moins partiellement latéralement vers l'extérieur de la section de bord latéral gauche de selle (602) tout en étant positionné au moins partiellement en dessous de la section de bord latéral gauche de selle (602) vue de côté, et
le capot avant droit (33b) est positionné au moins partiellement latéralement vers l'extérieur de la section de bord latéral droit de selle (603) tout en étant positionné au moins partiellement en dessous de la section de bord latéral droit de selle (603) vue de côté.

4. Véhicule du type à selle selon l'une des revendications 1 à 3, **caractérisé en ce que** la section de bord avant de la seconde partie de capot avant (33) recouvre la première partie de capot avant (32) vue de face.

5. Véhicule du type à selle selon l'une des revendications 1 à 3, **caractérisé en ce que** le capot avant (18) comporte une partie en retrait (52a, 52b), la partie en retrait (52a, 52b) étant disposée latéralement vers l'intérieur par rapport à la section de bord avant de la seconde partie de capot avant (33) et s'étendant le long de la section de bord avant de la seconde partie de capot avant (33).

6. Véhicule du type à selle selon la revendication 5, **caractérisé en ce que** la partie en retrait (52a, 52b) comporte une ouverture (53) formée pour communiquer avec un espace pour y disposer l'unité de moteur (7).

7. Véhicule du type à selle selon la revendication 6, **caractérisé en ce que** le capot avant (18) comporte une pluralité d'ailettes (38a, 38b), les ailettes (38a, 38b) étant disposées au moins partiellement dans la partie en retrait (52a, 52b), les ailettes (38a, 38b) s'étendant dans la direction transversale du véhicule,
les ailettes (38a, 38b) sont disposées selon des intervalles dans la direction du haut et du bas du véhicule et divisent la partie en retrait (52a, 52b) en une pluralité de chemins (P1 à P3), et
au moins l'un des chemins (P1) comporte l'ouverture (53) communiquant avec l'espace pour y disposer l'unité de moteur (7).

8. Véhicule du type à selle selon la revendication 7, **caractérisé en ce que** les chemins (P1 à P3) comportent un premier chemin (P1) et un deuxième chemin (P2) positionné en dessous du premier chemin (P1), le premier chemin (P1) comporte l'ouverture (53) communiquant avec l'espace pour y disposer l'unité de moteur (7) et le second chemin (P2) ne comporte aucune ouverture formée dans celui-ci.

9. Véhicule du type à selle selon l'une des revendications 6 à 8, **caractérisé en ce que** l'ouverture (53) est disposée de manière à recouvrir la seconde partie de capot avant (33) le véhicule étant vu de face.

10. Véhicule du type à selle selon l'une des revendications 5 à 9, **caractérisé en ce que** l'unité de moteur (7) comporte une culasse (70) disposée derrière le capot avant (18) et l'ouverture (53) est positionnée plus haut que la culasse (70).

11. Véhicule du type à selle selon l'une des revendications 1 à 10, **caractérisé en ce que** la seconde partie de capot avant (33) est un élément disposé séparément de la première partie de capot avant (32).

12. Véhicule du type à selle selon l'une des revendications 1 à 11, **caractérisé en ce que** la seconde partie de capot avant (33) est positionnée partiellement en arrière de la première partie de capot avant (32) et la seconde partie de capot avant (33) est fixée au couvercle latéral (19).

13. Véhicule du type à selle selon l'une des revendications 1 à 12, **caractérisé par** un repose-pieds pour passager (31a, 31b) permettant à un passager d'y poser ses pieds, dans lequel le capot latéral (19) comporte une partie avant positionnée en dessous et latéralement vers l'extérieur de la première partie de capot avant (33) et le repose-pieds pour passager (31a, 31b) est disposé en dessous de la partie avant du capot latéral (19).

14. Véhicule du type à selle selon l'une des revendications 1 à 13, **caractérisé en ce que** la selle (6), le capot latéral (19) et le marchepied (16) forment une ouverture enfermée par ceux-ci, et le capot avant (18) recouvre l'ouverture.

15. Véhicule du type à selle selon l'une des revendications 1 à 14, **caractérisé en ce que** l'unité de moteur (7) peut au moins partiellement être observée à travers l'ouverture vue de face lorsque le capot avant (18) est démonté.
